# EUROPEAN PATENT SPECIFICATION

(11) **EP 2 314 022 B1**
(45) Date of publication and mention of the grant of the patent: **19.10.2011**
(21) Application number: 09787293.1
(22) Date of filing: 03.07.2009
(51) Int. Cl.: H04L 12/46, H04L 12/56

(54) **Establishing pseudowires in packet switching networks**
Herstellen von Pseudowires in Paketvermittlungsnetzwerken
Installation de pseudo-câbles dans des réseaux à commutation de paquets

(30) Priority: 18.07.2008 US 176199
(43) Date of publication of application: 27.04.2011
(73) Proprietor: Alcatel Lucent, 75008 Paris (FR)
(72) Inventor: PIRBHAI, Shafiq, Ottawa Ontario K2K 2R1 (CA); TRADER, Christopher Edward, Dunrobin Ontario K0A 1T0 (CA); PHOENIX, Allan, Ottawa Ontario K2A 3B3 (CA)
(74) Representative: Nicolle, Olivier
(86) International application number: PCT/IB2009/054203
(87) International publication number: WO 2010/007603

(56) References cited:
- LUCA MARTINI CHRIS METZ CISCO SYSTEMS INC THOMAS D NADEAU MATTHEW BOCCI BT FLORIN BALUS MUSTAPHA AISSAOUI MIKE DUCKETT ALCATEL-LUC: "Segmented Pseudo Wire; draft-ietf-pwe3-segmented-pw-08.txt" IETF STANDARD-WORKING-DRAFT, INTERNET ENGINEERING TASK FORCE, IETF, CH, vol. pwe3, no. 8, 1 June 2008 (2008-06-01), XP015056275 ISSN: 0000-0004
- NABIL BITAR (EDITOR) VERIZON LUCA MARTINI (EDITOR) CISCO SYSTEMS INC MATTHEW BOCCI (EDITOR) ALCATEL-LUCENT: "Requirements for Multi-Segment Pseudowire Emulation Edge-to-Edge (PWE3); draft-ietf-pwe3-ms-pw-requirements-07.txt" REQUIREMENTS FOR MULTI-SEGMENT PSEUDOWIRE EMULATION EDGE-TO-EDGE (PWE3); DRAFT-IETF-PWE3-MS-PW-REQUIREMENTS-07.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. pwe3, no. 7, 1 June 2007 (2007-06-01), XP015058811
- BOCCI ALCATEL-LUCENT S BRYANT CISCO SYSTEMS M: "An Architecture for Multi-Segment Pseudowire Emulation Edge-to-Edge; draft-ietf-pwe3-ms-pw-arch-04.txt" AN ARCHITECTURE FOR MULTI-SEGMENT PSEUDOWIRE EMULATION EDGE-TO-EDGE; DRAFT-IETF-PWE3-MS-PW-ARCH-04.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. pwe3, no. 4, 26 June 2008 (2008-06-26), XP015058809

## Description

### Field of the invention

The invention is directed to communication networks, and in particular to setting up a pseudo wire (PW) that uses a tunneled connection having statically configured and dynamically configured segments.

### Background of the Invention

A pseudowire is a mechanism for carrying a native telecommunications service (e.g. T1 leased line, Frame Relay, Ethernet) over a packet switching network in a transparent manner emulating a wired connection. Typically the PSN uses Internet Protocol (IP) or Multi Protocol Label Switching (MPLS) packet forwarding. Protocol data units (PDUs) of the native service are communicated between two customer edge (CE) systems, wherein each CE system originates and/or terminates the native service. Typically, the CE systems engage in bidirectional communications using the native service carried by a pseudowire.

Each of the CE systems is connected to a respective provider edge (PE) system by an attachment circuit. A pseudowire is provided between the PE systems via a tunneled connection established through the PSN. A tunneled connection is also referred to herein as a PSN tunnel or tunnel. Various types of PSN tunnels can be used, as established using tunnel signaling such as Layer-2 Tunneling Protocol (L2TP), MPLS Label Distribution Protocol (LDP), and Resource Reservation Protocol - Traffic Engineering (RSVP-TE). PW/PE maintenance signaling is used to establish, maintain, and tear down pseudowires, as well as coordinate any parameters relating to endpoints of a pseudowire. The tunnel signaling protocol may be extended to provide mechanisms that enable the PE systems to exchange all information necessary to setup a pseudowire. Pseudowires can also be manually configured.

In operation, a native service PDU is received by a PE system from an originating CE system over an attachment circuit. The native service PDU is encapsulated to form a PW-PDU, and the PW-PDU is then sent to a peer PE system over a pseudowire between the two PE systems. The peer PE system receives the PW-PDU, decapsulates the PW-PDU to yield the native service PDU, and then sends the native service PDU to a terminating CE system via a corresponding attachment circuit.

More information on pseudowires can be found in "Pseudo Wire Emulation Edge-to-Edge (PWE3) Architecture", RFC3985, IETF, March 2005, by S. Bryant and P. Pate.

As already mentioned, pseudowires are useful for carrying various native telecommunications services over a PSN. One such service finding growing use is Circuit Emulation Service (CES) over a packet switching network (CESoPSN). Carriers can realize cost savings by moving Time Division Multiplex (TDM) circuits onto CESoPSN. For more information on carrying structured (i.e. N x DSO) TDM signals over pseudowires refer to "Structure-Aware Time Division Multiplex (TDM) Circuit Emulation Service over Packet Switched Network (CESoPSN)", RFC5086, IETF, December 2007, by A. Vainshtein et al. For more information on carrying structure-agnostic TDM signals on pseudowires refer to "Structure-Agnostic Time Division Multiplexing (TDM) over Packet (SAToP)", RFC4553, IETF, June 2006, by A. Vainshtein and Y.J. Stein.

As previously mentioned pseudowires can be statically or dynamically configured, wherein the latter can be triggered by an operator command from the management plane of a PE system, by signaling set-up or teardown of an attachment circuit, or by an auto-discovery mechanism. During the setup process, the PE systems exchange parameters relating to their respective endpoints of the pseudowire being setup. This exchange may be carried out using extensions to the tunnel signaling protocol used to establish a tunnel through the PSN for the pseudowire. In the case of TDM pseudowires over MPLS Networks, more details on these extensions, their use, and requirements can be found in IETF proposed standard "Control Protocol Extensions for Setup of TDM Pseudowires in MPLS Networks", draft-ietf pwe3-tdm-control-protocol-extensi-07.txt, IETF, March 2008, by A. Vainshtein and Y. J. Stein The IETF proposed standard "segmented Pseudowire", dragt-ietf-pwes-segmented-pw-08. txt, June 2008, by L. Martini et al describes how to connect pseudowires (Pw) between two distinct Pw control planes or PSN domains. However, since this proposed standard requires that several of such parameters exchanged by peer PE systems match in order for a pseudowire to be successfully established between the peer PE systems, a problem arises when at least one segment of the PSN tunnel used for the pseudowire is statically configured and another segment is dynamically configured.

When all segments of a PSN tunnel used for a TDM pseudowire are dynamically configured using for example MPLS LDP, interface parameters for the TDM pseudowire can be exchanged between peer PE systems using extensions described in the aforementioned proposed standard. Several of these exchanged parameters such as CEP/TDM payload bytes, CEP/TDM bit-rate, and certain TDM options must match for the pseudowire to be successfully established. In order for these parameters to be exchanged, one of the peer PE systems sends a label message containing the parameters to the other peer PE system. Each intermediate label switch router (LSR) in the path between the peer PE systems copies the parameters from an incoming forwarding equivalency class (FEC) table at an ingress service distribution point (SDP) of the LSR to an outgoing FEC at an egress SDP of the LSR, after which the LSR forwards a label message containing the parameters to the next LSR along the path, or the other peer PE system. In this manner, one peer PE system receives parameters from the other peer PE system, which enables a comparison of received and locally configured parameters to be made by that PE system, and visa versa. However, when a segment of the PSN tunnel is statically configured, there are no incoming and outgoing FEC tables associated with the SDPs of the statically configured segment, which results in a breakdown of the parameter exchange between the PE systems. This breakdown results in an inability to dynamically establish pseudowires, for example TDM pseudowires, when a segment of the PSN tunnel used by the pseudowire is statically configured.

Accordingly, a solution is needed for dynamically establishing pseudowires where at least one segment of the PSN tunnel used for the pseudowire is statically provisioned.

### Summary of the Invention

Embodiments of the invention enable a pseudowire to be dynamically established over a PSN tunnel when the tunnel includes both a statically configured segment and a dynamically configured segment.

According to an aspect of the invention two methods of establishing a pseudowire between two PE systems in a packet switching network as defined by independant claims 1 and 2 are provided. The methods over performed at an intermediate system along a tunneled connection used by the pseudowire.

According to another aspect of the invention two network nodes as defined by independent claims 4 and 5 are provided for communicating data packets over a tunneled connection used by a pseudowire between two PE systems of a packet switching network.

Advantageously, embodiments of the invention enable a network node that supports only static, and not dynamic, tunnel and pseudowire configuration to be included in dynamically configured pseudowires. This capability can be useful in cases where functionality required for such dynamic configuration has been omitted from the network node for cost or system performance reasons. Dynamically configured pseudowires or portions thereof, have an advantage over statically configured pseudowires in being capable of reacting to network failures, for example rerouting around a failed node or link using MPLS fast reroute.

### Brief Description of the Drawings

The invention will be further understood from the following detailed description with reference to the drawings, in which:
Figure 1 is a diagram of a network depicting a network node that is in accordance with an embodiment of the invention establishing a pseudowire; and
Figure 2 is a flow chart of a method of establishing a pseudowire according to another embodiment of the invention.

It will be noted that in the attached figures, like features bear similar labels.

### Detailed Description

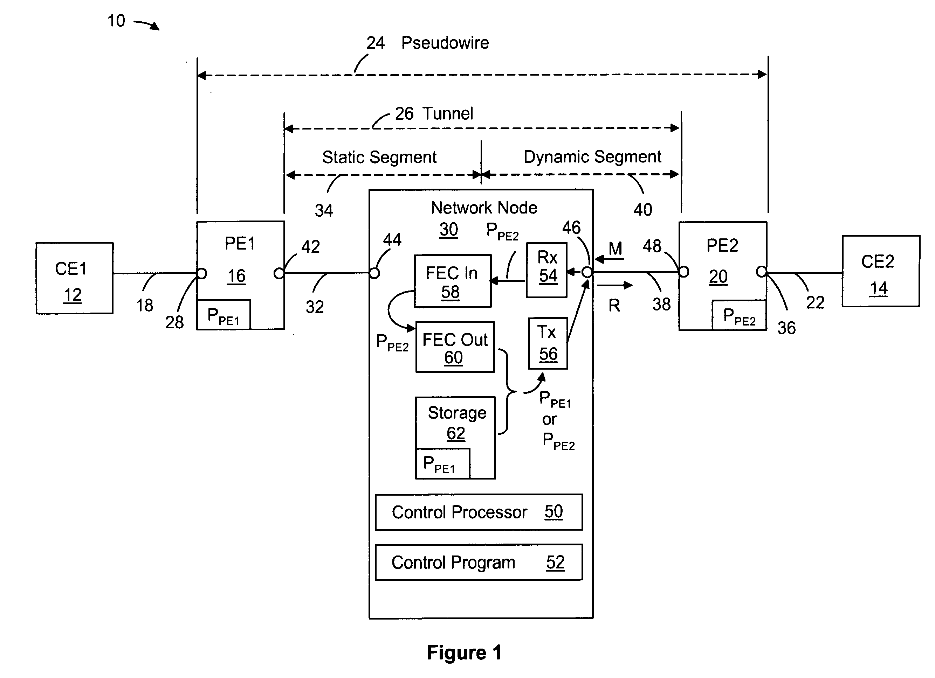

Referring to **Figure 1****,** a packet switching network (PSN) **10** which in this case is an MPLS network, provides Circuit Emulation Service (CES) between a first customer edge (CE) system **12** and a second CE system **14.** The first CE system is connected to a first provider edge (PE) system **16** via a first attachment circuit **18,** which in this case is a TDM circuit. The second CE system **14** is connected to a second PE system **20** via a second attachment circuit **22,** which is also a TDM circuit. The first and second PE systems **16, 20** are label switch routers. A TDM pseudowire **24** configured between the PE systems **16, 20** provides a native telecommunications service, for example T1 leased line, over the packet switching network. As previously described with reference to the prior art, the PE systems **16, 20** provide encapsulation, decapsulation, timing and sequencing functions to communicate protocol data units (PDUs) of the native telecommunications service over the TDM pseudowire in a manner that is transparent to the CE systems **12, 14.** For this purpose, a tunnel **26** is configured between the PE systems **16, 20.** As mentioned previously, various types of tunnels can be used and may be configured dynamically using various tunnel signaling protocols such as L2TP, MPLS LDP, and RSVP-TE. As well, the entire tunnel **26** or segments thereof may be configured statically.

The first PE system **16** includes a first service access point (SAP) **28** associated with the CES and the first attachment circuit **18.** The first PE system **16** is communicatively coupled to a network node **30** via a first path **32** through which PDUs of the CES are forwarded through a statically configured segment **34** of the tunnel **26.** The network node **30** is a label switch router. Although not shown, multiple network nodes could be in the first path **32.** Generally, any network nodes in the tunnel **26** between the first and second PE systems **16, 20** are referred to herein as intermediate systems of the tunnel **26.** This nomenclature includes the network node **30.**

The first PE system **16** has a first parameter P_{PE1} associated with the first attachment circuit **18** configured on it. The first parameter P_{PE1} specifies a value relating to the TDM circuit carried on the first attachment circuit **18.** Although only one such parameter is shown there could be several of them. For example, the first parameter P_{PE1} could be any of the previously mentioned parameters such as CEP/TDM payload bytes, CEP/TDM Bit-rate, and certain TDM options specified when establishing a TDM pseudowire.

The second PE system **20** includes a second service access point (SAP) **36** associated with the CES and the second attachment circuit **22.** The second PE system **20** is communicatively coupled to the network node **30** via a second path **38** through which PDUs of the CES are forwarded through a dynamically configured segment **40** of the tunnel **26.** Although not shown, multiple network nodes could be in the second path **38.**

The second PE system **20** has a second parameter P_{PE2} associated with the second attachment circuit **22** configured on it. The second parameter P_{PE2} specifies a value relating to the TDM circuit carried on the second attachment circuit **22.** Although only one such parameter is shown there could be several of them. For example, the second parameter P_{PE2} could be any of the previously mentioned parameters such as CEP/TDM payload bytes, CEP/TDM Bit-rate, and certain TDM options specified when establishing a TDM pseudowire.

A first service distribution point (SDP) **42** associated with the statically configured segment **34** is configured in the first PE system **16.** A second SDP **44** also associated with the statically configured segment **34** is configured in the network node **30.** The first and second SDPs **42, 44** are assigned to static labels, and therefore they are not involved in LDP label advertisement signaling.

A third SDP **46** associated with the dynamically configured segment **40** is configured in the network node **30.** A fourth SDP **48** also associated with the dynamically configured segment **40** is configured in the second PE system **20.** The third and fourth SDPs **46, 48** are assigned dynamic labels, and therefore they are involved in LDP label advertisement signaling.

The network node **30** includes a control processor **50** that executes a control program **52** to perform label switch routing on PDUs among other functions. The control processor **50** and control program **52** are referred to herein in a general sense in order to simplify the description of the invention. In practice the control processor **50** would typically be part of a control card of which there could be at least two for redundancy. The control program **52** would typically contain several modules or programs being executed simultaneously on each of the redundant control cards for full redundancy. Some functions provided by the network node **30** are provided on other circuit cards such as line cards, which are not shown in the figure.

The network node **30** is at a junction between the statically configured segment **34** and the dynamically configured segment **40.** This positioning in the tunnel **26** can be determined by the network node **30** by comparing the assignment of the second SDP **44,** i.e. to static labels, to the assignment of the third SDP **46,** i.e. to dynamic labels. Another way to enable the network node **30** to make this determination is to configure an indication of such positioning in the network node **30.** The control processor **50** executing certain instructions of the control program **52** provides a means of making the determination that the network node **30** is at such a junction. This would be done by checking for the aforementioned indication or by comparing the assignment of the second and third SDPs **44, 46** as previously described.

In order to dynamically establish the pseudowire **24,** the second PE system **20** sends a label message **M** containing the second parameter P_{PE2} to the network node **30** over the dynamic segment **40.** The label message **M** is in accordance with LDP label advertisement signaling. The network node **30** includes a means of receiving this message **M** and reading the second parameter P_{PE2} contained therein. These receiving means would typically be a combination of hardware and specific software instructions provided by the control processor **50** and control program **52** and a receiver **54** which is operable to receive PDUs arriving over the second path **38.** The receiver **54** would typically be implemented on a line card (not shown) of the network node **30.** The network node **30** then stores the second parameter P_{PE2} in an incoming FEC table **58** associated with the third SDP **46** and the dynamically configured segment **40.**

In order to finish establishing the pseudowire **24** the second PE system **20** requires a response **R** to the message **M.** The response **R** should contain one or more parameters relating to the pseudowire **24.** The response **R** is in accordance with LDP label advertisement signaling. In the case of a TDM pseudowire, certain parameters in the response **R** should match those sent in the message **M.** Examples of such parameters were previously noted. Typically, when an entire tunnel over which a pseudowire is to be carried is dynamically configured, the response **R** would be initiated at the first PE system **16.** However, in the present embodiment, since the tunnel **26** contains the static segment **34,** the message **M** is not delivered to the first PE system **16.** Therefore the response **R** can not be initiated from the first PE system **16.**

For the purpose of responding to the message **M** the network node **30** includes means for initiating the response **R.** These means are utilized responsive to receiving the message **M** at the network node **30** and the network node **30** determining that it is at the junction between the static segment **34** and the dynamic segment **40.** These initiating means would typically be a combination of hardware and specific software instructions provided by the control processor **50** and control program **52** and a transmitter **56** which is operable to transmit PDU_{S}, including the response **R,** over the second path **38.** The transmitter **56** would typically be implemented on a line card (not shown) of the network node **30.**

The response **R** contains one or more parameters for establishing the pseudowire **24.** As mentioned previously in the case of a TDM pseudowire, certain parameters sent by the second PE system **20** must match corresponding parameters received by the second PE system **20** in the response **R** in order for the second PE system to establish the pseudowire **24.** In the embodiment presently being described, only one such parameter is described as being included in the message **M** and in the response **R** in order to simplify the description, however the reader should understand that the parameter could equally represent a set of multiple such parameters.

The network node **30** includes an outgoing FEC table **60** associated with the third SDP **46** and the dynamically configured segment **40.** The outgoing FEC table **60** is capable of storing, among other things, the second parameter P_{PE2}. The control processor **50** executing specific software instructions in the control program **52** is capable of copying the second parameter P_{PE2} from the incoming FEC table **58** to the outgoing FEC table **60.** This copying would be performed responsive to the network node **30** determining that it is at the junction of the static segment **34** and the dynamic segment **40,** and also depending on how the network node **30** is configured. This copying functionality would be considered part of the initiating means previously mentioned.

The network node **30** also includes a storage **62** which can be used for storing, among other things, the first parameter P_{PE1}. For example, the first parameter P_{PE1} could be written into the storage **62** during, or after, configuration of the static segment **34.**

The network node **30** forms the response **R** by including therein either the first parameter P_{PE1}, read from the storage **62** or the second parameter P_{PE2} read from the incoming FEC **58,** depending on how the network node **30** is configured. That is, the network node **30** is configured either to copy the second parameter P_{PE2} from the incoming FEC **58** into the outgoing FEC **60** and include the second parameter P_{PE2} in the response **R,** or it is configured to read the first parameter P_{PE1}, from the storage **62** and include the first parameter P_{PE1}, in the response **R.** In either case, the network node **30** initiates the response **R,** which includes forming and sending the response **R,** after it determines that it is at the junction between the static segment **34** and the dynamic segment **40.** The functionality for forming and sending the response **R** are consider part of the aforementioned initiating means.

Upon receiving the response **R,** the second PE system **20** compares the parameter contained therein to the second parameter P_{PE2} stored locally. If the two parameters match, establishment of the TDM pseudowire **24** is completed and the CES is brought into service; otherwise establishment of the pseudowire **24** fails and the CES remains out of service.

This embodiment of the invention has been described with respect to TDM pseudowires. However, it should be appreciated that embodiments of the invention are not limited to TDM pseudowires. Embodiments of the invention could be employed to dynamically establish pseudowires of any type between two PE systems over a tunnel having a dynamically configured segment and a statically configured segment.

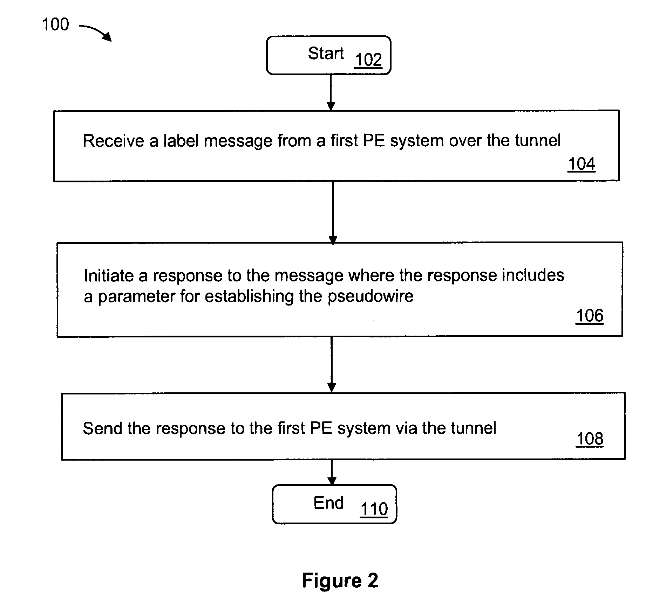

Referring to **Figure 2****,** a method **100** of establishing a pseudowire between two PE systems in a PSN is performed at an intermediate system along a tunnel of the pseudowire. Execution of the method is responsive to the intermediate system being at a junction between a statically configured segment of the tunnel and a dynamically configured segment. The intermediate system begins at the start **102** of the method **100** and proceeds to a step **104** of receiving a message from a first of the PE systems via the tunnel. The intermediate system receives the message over the dynamically configured segment. Next, the intermediate system proceeds to a step **106** of initiating a response to the message, where the response includes a parameter for establishing the pseudowire. The intermediate node then proceeds to a step **108** of sending the response to the first PE system via the dynamically configured segment of the tunnel. Whereupon receiving the response the first PE segment compares the parameter to one stored locally and, consequent to the parameters matching each other, completes establishment of the pseudowire.

Numerous modifications, variations and adaptations may be made to the embodiment of the invention described above without departing from the scope of the invention, which is defined in the claims.

## Claims

1. A method of establishing a pseudowire (24) between two provider edge systems (16,20) in a packet switching network, the method comprising:
at an intermediate system (30) along a tunnel (26) of the pseudowire, wherein the intermediate system is at a junction between a statically configured segment (34) of the tunnel and a dynamically configured segment (40) of the tunnel:
receiving (104) a message for establishing the pseudowire from the dynamically configured segment from a first of the provider edge systems, the message carried in the tunnel,
initiating (106) a response to the message, the response including a parameter for establishing the pseudowire, and
sending (108) the response over the dynamically configured segment to the first provider edge system,
***characterized in that*** the method further comprises:
reading the parameter from the message;
forming the response using the parameter;
storing the parameter in an incoming table (58) associated with the dynamically configured segment; and
copying the parameter from the incoming table to an outgoing table (60) associated with the dynamically configured segment, wherein the incoming and outgoing tables are forwarding equivalency class tables and wherein the message is received and the response is sent over the dynamically configured segment of the tunnel using a multiprotocol label switching label distribution protocol.

2. A method of establishing a pseudowire (24) between two provider edge systems (16,20) in a packet switching network, the method comprising:
at an intermediate system (30) along a tunnel (26) of the pseudowire, wherein the intermediate system is at a junction between a statically configured segment (34) of the tunnel and a dynamically configured segment (40) of the tunnel:
receiving (104) a message from the dynamically configured segment from a first of the provider edge systems, the message carried in the tunnel,
initiating (106) a response to the message, the response including a parameter for establishing the pseudowire , and
sending (108) the response over the dynamically configured segment to the first provider edge system
***characterized in that*** the parameter has been configured at a second of the two provider edge systems, is associated with the statically configured segment of the tunnel, and is locally stored at the intermediate system, and **in that** the method further comprises:
reading the parameter from a local storage (62) at the intermediate system,
forming the response using the parameter, wherein the message is received and the response is sent over the dynamically configured segment of the tunnel using a multiprotocol label switching label distribution protocol.

3. The method of claim 1 or 2, wherein the intermediate system is a label switch router.

4. A network node (30) for communicating data packets over a tunneled (26) connection used by a pseudowire (24) between two provider edge, PE, systems (16,20) of a packet switching network, the network node comprising:
means for determining whether the network node is at a junction of a statically configured segment (34) and a dynamically configured segment (40) of the tunneled connection;
means for receiving a message for establishing the pseudowire from the dynamically configured segment, from a first of the provider edge systems;
means for initiating a response to the message responsive to a determination that the network node is at the junction, wherein the means for initiating form the response by including therein a parameter for establishing the pseudowire and send the response to the first of the PE systems over the dynamically configured segment ***characterized in that***
the means for receiving are operable to read the parameter from the message,
and **in that** the network node further comprises:
an incoming table (58) associated with the dynamically configured segment; and
an outgoing table (60) associated with the dynamically configured segment,
wherein the means for receiving store the parameter in the incoming table and the means for initiating form the response to copy the parameter from the incoming table to the outgoing table, the incoming and outgoing tables are forwarding equivalency class tables, and the means for receiving and the means for initiating respectively receive the message and send the response over the dynamically configured segment using a multiprotocol label switching label distribution protocol.

5. A network node (30) for communicating data packets over a tunneled (26) connection used by a pseudowire (24) between two provider edge, PE, systems (16,20) of a packet switching network, the network node comprising:
means for determining whether the network node is at a junction of a statically configured segment (34) and a dynamically configured segment (40) of the tunneled connection;
means for receiving a message for establishing the pseudowire from the dynamically configured segment, from a first of the provider edge systems;
means for initiating a response to the message responsive to a determination that the network node is at the junction, wherein the means for initiating form the response by including therein a parameter for establishing the pseudowire and send the response to the first of the PE systems over the dynamically configured segment ***characterized in that*** the parameter has been configured at a second of the two PE systems and is associated with the statically configured segment of the tunnel, and **in that** the network node further comprises:
storage means (62) for storing the parameter, wherein the means for initiating are further operable to read the parameter from the storage means, and the means for receiving and the means for initiating respectively receive the message and send the response over the dynamically configured segment using a multiprotocol label switching label distribution protocol.

6. The network node of claim 4 or 5, wherein the means for determining comprises means for comparing a first service distribution point, SDP, associated with the statically configured segment and provisioned on the network node with a second SDP associated with the dynamically configured segment and provisioned on the network node, and the network node is a label switch router and the first SDP is assigned to static labels and the second SDP is assigned to label distribution protocol, LDP, label advertisement signaling.

## Patentansprüche

1. Verfahren zum Herstellen eines Pseudowires (24) zwischen zwei Anbieter-Randsystemen (16, 20) in einem Paketvermittlungsnetzwerk, wobei das Verfahren umfasst:
An einem Zwischensystem (30) entlang eines Tunnels (26) des Pseudowires, wobei das Zwischensystem an einem Übergang zwischen einem statisch konfigurierten Segment (34) des Tunnels und einem dynamisch konfigurierten Segment (40) des Tunnels angeordnet ist:
Empfangen (104) einer Nachricht für die Herstellung des Pseudowires von dem dynamisch konfigurierten Segment von einem ersten der Anbieter-Randsysteme, wobei die Nachricht im Tunnel transportiert wird,
Initiieren (106) einer Antwort auf die Nachricht, wobei die Antwort einen Parameter für die Herstellung des Pseudowires enthält, und
Senden (108) der Nachricht über das dynamisch konfigurierte Segment an das erste Anbieter-Randsystem,
***dadurch gekennzeichnet, dass*** das Verfahren weiterhin umfasst:
Auslesen des Parameters aus der Nachricht;
Bilden der Antwort unter Verwendung des Parameters;
Speichern des Parameters in einer mit dem dynamisch konfigurierten Segment assoziierten Eingangstabelle (58); und
Kopieren des Parameters aus der Eingangstabelle in eine mit dem dynamisch konfigurierten Segment assoziierte Ausgangstabelle (60), wobei die Eingangs- und die Ausgangstabelle Weiterleitungs-Äquivalenzklassentabellen sind, und wobei der Empfang der Nachricht und das Senden der Antwort über das dynamische konfigurierte Segment des Tunnels unter Verwendung eines Multiprotocol Label Switching Label Distribution-Protokolls erfolgt.

2. Verfahren zum Herstellen eines Pseudowires (24) zwischen zwei Anbieter-Randsystemen (16, 20) in einem Paketvermittlungsnetzwerk, wobei das Verfahren umfasst:
An einem Zwischensystem (30) entlang eines Tunnels (26) des Pseudowires, wobei das Zwischensystem an einem Übergang zwischen einem statisch konfigurierten Segment (34) des Tunnels und einem dynamisch konfigurierten Segment (40) des Tunnels angeordnet ist:
Empfangen (104) einer Nachricht von dem dynamisch konfigurierten Segment von einem ersten der Anbieter-Randsysteme, wobei die Nachricht im Tunnel transportiert wird,
Initiieren (106) einer Antwort auf die Nachricht, wobei die Antwort einen Parameter für die Herstellung des Pseudowires enthält, und
Senden (108) der Nachricht über das dynamisch konfigurierte Segment an das erste Anbieter-Randsystem,
***dadurch gekennzeichnet, dass*** der Parameter an einem zweiten der beiden Anbieter-Randsysteme konfiguriert wurde, mit dem statisch konfigurierten Segment des Tunnels assoziiert ist und lokal an dem Zwischensystem gespeichert wird, und dass das Verfahren weiterhin umfasst:
Auslesen des Parameters aus einem lokalen Speicher (62) am Zwischensystem
Bilden der Antwort unter Verwendung des Parameters, wobei der Empfang der Nachricht und das Senden der Antwort über das dynamische konfigurierte Segment des Tunnels unter Verwendung eines Multiprotocol Label Switching Label Distribution-Protokolls erfolgt.

3. Verfahren nach Anspruch 1 oder 2, wobei das Zwischensystem ein Label Switch Router ist.

4. Netzwerkknoten (30) für die Übermittlung von Datenpaketen über eine von einem Pseudowire (24) benutzte getunnelte (26) Verbindung zwischen zwei Anbieter-Randsystemen, PE, (16, 20) eines Paketvermittlungsnetzwerks, wobei der Netzwerkknoten umfasst:
Mittel zum Ermitteln, ob der Netzwerkknoten an einem Übergang eines statisch konfigurierten Segments (34) und eines dynamisch konfigurierten Segments (40) der getunnelten Verbindung angeordnet ist;
Mittel zum Empfangen einer Nachricht für die Herstellung des Pseudowires von dem dynamisch konfigurierten Segment von einem ersten der Anbieter-Randsysteme;
Mittel zum Initiieren einer Antwort auf die Nachricht in Reaktion auf die Ermittlung, dass der Netzwerkknoten an einem Übergang angeordnet ist, wobei die Mittel zum Initiieren die Antwort durch Einfügen in diese eines Parameters für die Herstellung des Pseudowires bilden und die Antwort über das dynamisch konfigurierte Segment an das erste der PE-Systeme senden;
***dadurch gekennzeichnet, dass***
die Mittel zum Empfangen betriebsfähig sind, um den Parameter aus der Nachricht auszulesen, und dass der Netzwerkknoten weiterhin umfasst:
Eine mit dem dynamisch konfigurierten Segment assoziierte Eingangstabelle (58);
eine mit dem dynamisch konfigurierten Segment assoziierte Ausgangstabelle (60);
wobei die Mittel zum Empfangen den Parameter in der Eingangstabelle speichern, und die Mittel zum Initiieren die Antwort für das Kopieren des Parameters aus der Eingangstabelle in die Ausgangstabelle bilden, wobei die Eingangs- und die Ausgangstabelle Weiterleitungs-Äquivalenzklassentabellen sind, und wobei der Empfang der Nachricht an dem Mittel zum Empfangen und das Senden der Antwort durch die Mittel zum Initiieren über das dynamisch konfigurierte Segment unter Verwendung eines Multiprotocol Label Switching Label Distribution-Protokolls erfolgt.

5. Netzwerkknoten (30) für die Übermittlung von Datenpaketen über eine von einem Pseudowire (24) benutzte getunnelte (26) Verbindung zwischen zwei Anbieter-Randsystemen, PE, (16, 20) eines Paketvermittlungsnetzwerks, wobei der Netzwerkknoten umfasst:
Mittel zum Ermitteln, ob der Netzwerkknoten an einem Übergang eines statisch konfigurierten Segments (34) und eines dynamisch konfigurierten Segments (40) der getunnelten Verbindung angeordnet ist;
Mittel zum Empfangen einer Nachricht für die Herstellung des Pseudowires von dem dynamisch konfigurierten Segment von einem ersten der Anbieter-Randsysteme; Mittel zum Initiieren einer Antwort auf die Nachricht in Reaktion auf die Ermittlung, dass der Netzwerkknoten an einem Übergang angeordnet ist, wobei die Mittel zum Initiieren die Antwort durch Einfügen in diese eines Parameters für die Herstellung des Pseudowires bilden und die Antwort über das dynamisch konfigurierte Segment an das erste der PE-Systeme senden;
***dadurch gekennzeichnet, dass*** der Parameter an einem zweiten der beiden PE-Systeme konfiguriert wurde und mit dem statisch konfigurierten Segment des Tunnels assoziiert ist, und dass der Netzwerkknoten weiterhin umfasst
Speichermittel (62) zum Speichern des Parameters, wobei die Mittel zum Initiieren weiterhin betriebsfähig sind, um den Parameter aus dem Speichermittel auszulesen, und wobei der Empfang der Nachricht an dem Mittel zum Empfangen und das Senden der Antwort durch die Mittel zum Initiieren über das dynamisch konfigurierte Segment unter Verwendung eines Multiprotocol Label Switching Label Distribution-Protokolls erfolgt.

6. Netzwerkknoten nach Anspruch 4 oder 5, wobei die Mittel zum Ermitteln Mittel zum Vergleichen eines ersten Dienstverteilungspunktes, I**,** SDP, welcher mit dem statisch konfigurierten Segment assoziiert ist und auf dem Netzwerkknoten bereitgestellt wird, mit einem zweiten SDP, welcher mit dem dynamisch konfigurierten Netzwerkknoten assoziiert ist und auf dem Netzwerkknoten bereitgestellt wird, und wobei der Netzwerkknoten ein Label Switch Router ist und der erste SDP statischen Labels zugeordnet ist, und der zweite SDP der Label-Verteilungsprotokoll, LDP, Label-Ankündigungssignalisierung zugeordnet ist.

## Revendications

1. Procédé pour établir un pseudo-fil (24) entre deux systèmes de bordure fournisseurs (16, 20) dans un réseau à commutation de paquets, le procédé comprenant :
au niveau d'un système intermédiaire (30) le long d'un tunnel (26) du pseudo-fil, le système intermédiaire se trouvant à une jonction entre un segment à configuration statique (34) du tunnel et un segment à configuration dynamique (40) du tunnel :
Réception (104) d'un message pour établir le pseudo-fil depuis le segment à configuration dynamique de la part d'un premier des systèmes de bordure fournisseurs, le message étant transporté dans le tunnel,
Initiation (106) d'une réponse au message, la réponse incluant un paramètre pour établir le pseudo-fil, et
Envoi (108) de la réponse sur le segment à configuration dynamique au premier système de bordure fournisseur,
***caractérisé en ce que*** le procédé comprend en outre :
Lecture du paramètre à partir du message ;
Formation de la réponse en utilisant le paramètre ;
Stockage du paramètre dans une table d'entrée (58) associée au segment à configuration dynamique ; et
Copie du paramètre de la table d'entrée vers une table de sortie (60) associée au segment à configuration dynamique, procédé selon lequel les tables d'entrée et de sortie sont des tables de classe d'équivalence de transfert et selon lequel le message est reçu et la réponse est envoyée sur le segment à configuration dynamique du tunnel en utilisant un protocole de distribution d'étiquette à commutation multiprotocole avec étiquette.

2. Procédé pour établir un pseudo-fil (24) entre deux systèmes de bordure fournisseurs (16, 20) dans un réseau à commutation de paquets, le procédé comprenant :
au niveau d'un système intermédiaire (30) le long d'un tunnel (26) du pseudo-fil, le système intermédiaire se trouvant à une jonction entre un segment à configuration statique (34) du tunnel et un segment à configuration dynamique (40) du tunnel :
Réception (104) d'un message depuis le segment à configuration dynamique de la part d'un premier des systèmes de bordure fournisseurs, le message étant transporté dans le tunnel,
Initiation (106) d'une réponse au message, la réponse incluant un paramètre pour établir le pseudo-fil, et
Envoi (108) de la réponse sur le segment à configuration dynamique au premier système de bordure fournisseur,
***caractérisé en ce que*** le paramètre a été configuré au niveau d'un deuxième des deux systèmes de bordure fournisseurs, est associé avec le segment à configuration statique du tunnel, et il est stocké localement au niveau du système intermédiaire, et **en ce que** le procédé comprend en outre :
Lecture du paramètre depuis un stockage local (62) au niveau du système intermédiaire,
Formation de la réponse en utilisant le paramètre, procédé selon lequel le message est reçu et la réponse est envoyée sur le segment à configuration dynamique du tunnel en utilisant un protocole de distribution d'étiquette à commutation multiprotocole avec étiquette.

3. Procédé selon la revendication 1 ou 2, selon lequel le système intermédiaire est un routeur à commutation d'étiquette.

4. Noeud de réseau (30) communiquant des paquets de données sur une connexion en tunnel (26) utilisée par un pseudo-fil (24) entre deux systèmes de bordure fournisseurs, PE, (16, 20) d'un réseau à commutation de paquets, le noeud de réseau comprenant :
des moyens de détermination si le noeud de réseau se trouve à une jonction d'un segment à configuration statique (34) et d'un segment à configuration dynamique (40) de la connexion en tunnel ;
des moyens de réception d'un message pour établir le pseudo-fil depuis le segment à configuration dynamique, de la part d'un premier des systèmes de bordure fournisseurs ;
des moyens d'initiation d'une réponse au message répondant à une détermination que le noeud de réseau se trouve à la jonction, les moyens d'initiation formant la réponse en y incluant un paramètre pour établir le pseudo-fil et envoyant la réponse au premier des systèmes PE sur le segment à configuration dynamique, ***caractérisé en ce que***
les moyens de réception peuvent être utilisés pour lire le paramètre à partir du message et **en ce que** le noeud de réseau comprend en outre :
une table d'entrée (58) associée au segment à configuration dynamique ; et
une table de sortie (60) associée au segment à configuration dynamique, les moyens de réception stockant le paramètre dans la table d'entrée et les moyens d'initiation formant la réponse pour copier le paramètre de la table d'entrée vers la table de sortie, les tables d'entrée et de sortie étant des tables de classe d'équivalence de transfert et les moyens de réception ainsi que les moyens d'initiation recevant le message et envoyant la réponse respectivement sur le segment à configuration dynamique en utilisant un protocole de distribution d'étiquette à commutation multiprotocole avec étiquette.

5. Noeud de réseau (30) pour communiquer des paquets de données sur une connexion en tunnel (26) utilisée par un pseudo-fil (24) entre deux systèmes de bordure fournisseurs, PE, (16, 20) d'un réseau à commutation de paquets, le noeud de réseau comprenant :
des moyens de détermination si le noeud de réseau se trouve à une jonction d'un segment à configuration statique (34) et d'un segment à configuration dynamique (40) de la connexion en tunnel ;
des moyens de réception d'un message pour établir le pseudo-fil depuis le segment à configuration dynamique, de la part d'un premier des systèmes de bordure fournisseurs ;
des moyens d'initiation d'une réponse au message répondant à une détermination que le noeud de réseau se trouve à la jonction, les moyens d'initiation formant la réponse en y incluant un paramètre pour établir le pseudo-fil et envoyant la réponse au premier des systèmes PE sur le segment à configuration dynamique,
***caractérisé en ce que*** le paramètre a été configuré au niveau d'un deuxième des deux systèmes PE et il est associé avec le segment à configuration statique du tunnel, et **en ce que** le noeud de réseau comprend en outre :
des moyens de stockage (62) pour stocker le paramètre, les moyens d'initiation pouvant en outre être utilisés pour lire le paramètre à partir des moyens de stockage, et les moyens de réception ainsi que les moyens d'initiation recevant le message et envoyant la réponse respectivement sur le segment à configuration dynamique en utilisant un protocole de distribution d'étiquette à commutation multiprotocole avec étiquette.

6. Noeud de réseau selon la revendication 4 ou 5, avec lequel les moyens de détermination comprennent des moyens pour comparer un premier point de distribution de service, SDP, associé au segment à configuration statique et fourni sur le noeud de réseau avec un deuxième SDP associé au segment à configuration dynamique et fourni sur le noeud de réseau, et le noeud de réseau est un routeur à commutation d'étiquettes et le premier SDP est affecté aux étiquettes statiques et le deuxième SDP est affecté à la signalisation d'annonce d'étiquette du protocole de distribution d'étiquette, LDP.
